# EUROPEAN PATENT APPLICATION

(11) **EP 2 662 128 A1**
(43) Date of publication of application: **13.11.2013**
(21) Application number: 12167220.8
(22) Date of filing: 09.05.2012
(51) Int. Cl.: B01D 53/90, C01C 1/00, F01N 3/20, C01C 1/08

(54) **Method and system for purifying the exhaust gases of a combustion engine**

(71) Applicant: Inergy Automotive Systems Research (Société Anonyme), 1120 Bruxelles (BE)
(72) Inventor: Dougnier, Francois, 3190 Boortmeerbeek (BE); Madoux, Dominique, 7611 Rumes (BE); Van Schaftingen, Jules-Joseph, 1300 Wavre (BE); Wouters, Paul, 1800 Vilvoorde (BE)
(74) Representative: Vande Gucht, Anne

(57) **Abstract**

SCR method for the exhaust gases of an internal combustion engine, according to which:
- an ammonia precursor is stored in a storage tank (1)
- part of this precursor is thermally decomposed either directly prior to or while being metered into the exhaust gases
- at least intermittently and parallel to or in alternation therewith, ammonia released from a solid storage medium where it is stored by sorption is also metered in the exhaust gases, said ammonia having been generated by thermally decomposing a stream of the stored ammonia precursor in a heater (3), wherein no fluid is returned from the heater to the storage tank and wherein:
- either the thermal decomposition of the ammonia precursor generates no water
- or the thermal decomposition of the ammonia precursor generates water which is separated from the ammonia and collected.

## Description

The present application relates to a method and a system for purifying the exhaust gases of a combustion engine.

Legislation on vehicle and truck emissions stipulates, amongst other things, a reduction in the release of nitrogen oxides NOₓ into the atmosphere. One known way to achieve this objective is to use the SCR (Selective Catalytic Reduction) process which enables the reduction of nitrogen oxides by injection of a reducing agent, generally ammonia, into the exhaust line. This ammonia may derive from the pyrolytic (thermal) decomposition of an ammonia precursor solution, generally a urea solution. Alternatively, this ammonia may be released from a solid where it was trapped by sorption.

With the SCR process, the high levels of NOₓ produced in the engine during combustion at optimized efficiency are treated in a catalyst on exiting the engine. This treatment requires the use of the reducing agent at a precise concentration and of extreme quality.

In order to do this, it is necessary to equip the vehicles with a tank containing an additive solution (generally a eutectic urea/water solution), a solid additive or a solid on which ammonia is stored by sorption, and also with a device for metering the desired amount of additive/ammonia and injecting it into the exhaust line.

With SCR systems using urea solutions, since the aqueous urea solutions generally used for this purpose (eutectic solution of 32.5 wt% urea in water) freeze at -11°C, it is generally necessary to provide a heating device to liquefy the solution in order to be able to inject it into the exhaust line in the event of starting in freezing conditions.

Several systems have been provided in the prior art for this purpose. Generally, these systems comprise heating devices that involve either specific heating elements or a bypass of the engine cooling circuit (for example, see Application WO 2006/064001 in the name of the Applicant).

In case of cold start, it is required to be able to start the SCR system as soon as possible after starting the engine so that the area where the pump sucks is preferably de-iced very quickly. However, even by doing so, it takes a while before enough additive solution is thawed.

Also with solid state ammonia precursors, for example urea or ammonium carbamate in the form of powder, pellets or flakes, thermal decomposition takes a while so that ammonia will not be available quickly enough especially during a cold start.

On the other hand, while merely using solid ammonia storage systems allows to send pure NH₃ in the exhaust gases of the vehicle quickly even at low temperature, offering high performance in typical driving cycle, their main drawback is that no automotive NH₃ refilling standards nor logistic channels are provided (while commercial urea/water solutions are available namely under the brand name Adblue^{®}, and with associated filling systems).

Besides, the current way of the matrix regeneration consists of connecting the matrix storage container to an ammonia source, typically a highly pressurized cylinder. In this procedure, the matrix storage container has to be dismounted from the vehicle for ammonia loading. Moreover, sending a high pressure of ammonia in the solid matrix results in a huge heat generation due to exothermal sorption reaction (tens of thousands J/mol NH₃, as a likely order of magnitude), hence the need of a cooling unit as heat sink. High temperature can damage parts of the system and induce long regeneration time.

US patent 7712304 discloses a method aiming at solving these problems comprising delivering a first auxiliary agent from a supply tank to the exhaust gas (generally an eutectic urea/water solution), subjecting a portion thereof at least intermittently to a chemical conversion into a second auxiliary agent (generally ammonia), storing the second auxiliary agent in a reservoir (4), for instance on a solid like a zeolite or a salt that forms a complex with ammonia, and at least intermittently delivering the second auxiliary agent to the exhaust gas parallel to or in alternation with the first auxiliary agent.

The embodiment detailed in that patent uses an intermediate reactor (3) wherein the chemical conversion takes places and from which the by-products of the reaction (generally water and carbon dioxide) are generally flushed back to the first auxiliary agent supply tank, so that the concentration of urea in the supply tank evolves (i.e. urea is diluted in water), which disturbs the metering process.

The present invention aims namely at solving this problem by providing a method for making ammonia available quickly even during the cold start of an SCR system while using an ammonia source which remains stable in composition over time so as to allow an easy an accurate metering over time in regular use.

The object of the invention is therefore an SCR method for the exhaust gases of an internal combustion engine, according to which:
- an ammonia precursor is stored in a storage tank
- part of this precursor is thermally decomposed either directly prior to or while being metered into the exhaust gases
- at least intermittently and parallel to or in alternation therewith, ammonia released from a solid storage medium where it is stored by sorption is also metered in the exhaust gases, said ammonia having been generated by thermally decomposing a stream of the stored urea precursor in a heater, wherein no fluid is returned from the heater to the storage tank and wherein:
- either the thermal decomposition of the ammonia precursor generates no water
- or the thermal decomposition of the ammonia precursor generates water which is separated from the ammonia and collected.

The expression "SCR method" is understood to mean a method for the selective catalytic reduction of the NOₓ from the exhaust gases of an internal combustion engine, preferably of a vehicle, using ammonia and/or an ammonia precursor which is preferably a urea solution or a solid compound like solid urea or ammonium carbamate.

The terms "urea solution" are understood to mean any, generally aqueous, solution containing urea. The invention gives good results with eutectic water/urea solutions for which there is a quality standard: for example, according to the standard DIN 70070, in the case of the AdBlue^{®} solution (commercial solution of urea), the urea content is between 31.8 % and 33.2 % (by weight) (i.e. 32.5 +/- 0.7 wt%) hence an available amount of ammonia between 18.0 % and 18.8 %. The invention may also be applied to the urea/ammonium formate mixtures, also in aqueous solution, sold under the trade name Denoxium™ and of which one of the compositions (Denoxium-30) contains an equivalent amount of ammonia to that of the AdBlue^{®} solution. The latter have the advantage of only freezing from -30°C onwards (as opposed to -11°C), but have the disadvantages of corrosion problems linked to the possible release of formic acid. The present invention is particularly advantageous in the context of eutectic water/urea solutions, which are widely available in gas stations.

According to the invention, no fluid is returned from the heater to the storage tank. Generally, the complete stream of ammonia precursor is thermally decomposed in the heater but if it is not the case, the reminder stays inside the heater until the newt ammonia generation.

By "stream" is in fact meant a stream (part) of the solid or of the liquid ammonia precursor stored in the storage tank and directed to the heater to be thermally decomposed.

According to the invention, if the ammonia precursor generates water by thermal decomposition, this water is separated from the ammonia, collected and preferably prevented from being stored on the solid storage medium. Separation of the water from the ammonia, and generally from the eventual other thermal decomposition products (generally gases like CO₂), can be made using a condenser or a membrane like disclosed in US patent 4758250 for instance, which is a polymeric membrane. The condenser may be a specific one comprising a specific shaped tube having different parts at different temperatures (as described in example 2 below); a phase change material, or any other means for cooling and condensing the gases. Alternatively, the condenser may be part of a device already onboard the vehicle, for instance: part of the vehicle air conditioning system.

The water collected may be vaporised in the exhaust gases and/or at least part of it can be stored for instance to be available for dissolving excess ammonia that would pressurize unduly the storage tank of the solid storage medium (see embodiment with pressure relief valve described below).

As mentioned previously, SCR systems generally comprise at least one storage tank and a system for feeding the ammonia and the ammonia precursor to the exhaust gases, and which generally comprises active components such as a pump, filter, valve(s), conduits (feed and/or return conduits), injector(s)... In the case of a urea solution, said solution is generally metered in the exhaust gases by an injector having a controlled opening time and/or frequency. In the case of a solid ammonia precursor or of urea stored on a solid storage medium, the precursor/medium is generally heated to generate an ammonia pressure (typically about 2 or 3 bar) and a control unit acts on a valve (generally an electronic one) allowing to meter the correct amount of ammonia in the exhaust gases. Generally, the ammonia is metered using a gas line which may comprise a non return valve close to the metering point.

The method according to the invention generally uses two separate storage tanks: one for the ammonia precursor and one for the solid storage medium which stores ammonia by sorption. As described in patent application WO 2006/012903, metal ammine salts (preferably alkaline earth metal chlorides) can be used as solid storage media for ammonia.

According to the invention, part of the ammonia precursor is thermally decomposed either directly prior to or while being metered into the exhaust gases and this without storing the ammonia released by thermal decomposition on the solid storage medium. Generally, ammonia precursor solutions are directly metered in the exhaust gases, where they decompose thermally, while solid ammonia precursors are first thermally decomposed and then, their decomposition products are metered in the exhaust gases.

According to the invention, at least intermittently and parallel to or in alternation with the direct metering of ammonia precursor or decomposition products thereof in the exhaust gases, ammonia released from the solid storage medium is also metered in the exhaust gases. This ammonia release is also generally made thermally although it may also at least partly be released by pressure difference.

The terms "at least intermittently and parallel to or in alternation with" mean that the metering of ammonia desorbed from the solid storage medium may be continuous, although it generally is not, and that it may also happen while metering additive (or decomposition products thereof) from the storage tank, although again, it generally does not happen. According to a preferred embodiment of the invention, metering of ammonia desorbed from the solid storage medium takes place when there is no ammonia precursor available in the storage tank (generally either because said tank is empty, or because it is frozen).

Preferably, the metering of ammonia desorbed from the solid storage medium takes place when the engine is running and when there is no ammonia precursor available in the storage tank.

In order to perform the thermal steps of the method of the invention (thermal decomposition, evaporation and thermal desorption from the storage medium, the case being), resistive heating elements may be used. These resistive heating elements may be metallic heating filaments (wires), flexible heaters, (that is to say heaters comprising one or more resistive track(s) affixed to a film or placed between two films (that is to say two substantially flat supports, the material and thickness of which are such that they are flexible)) or any other type of resistive elements that have a shape, size and flexibility suitable for being inserted into and/or wound around the components of the SCR system.

In a preferred embodiment of the invention, at least the thermal decomposition of the ammonia precursor in the heater is performed using the dissipated heat of the engine (for instance, a flow of the liquid engine cooling system) and/or exhaust line (gases). The formation of an adequate quantity of ammonia to be stored on the solid storage medium (i.e. the quantity required to operate the SCR system until enough ammonia from the precursor decomposition is available) by thermal decomposition of a stream of ammonia precursor in the heater can be achieved at the end of vehicle (engine) operation, preferably also using the dissipated heat of the engine and/or exhaust line for example to evaporate water, the case being. Thus, at next engine start, the necessary mount of ammonia gas for SCR operation is readily available due to the rapid desorption of ammonia.

The thermal decomposition of the ammonia precursor in the heater may be induced at a constant temperature. Alternatively, in the case or a precursor solution, said solution may first be heated in contact with a heating device at a first temperature (for example, in the 40°C - 100°C range), for water to evaporate until the ammonia precursor reaches a solid state. The heating device is then heated at a second temperature (for example in the range 50°C - 500°C) at which the solid ammonia precursor is decomposed with the generation of ammonia gas.

When heating the storage medium to release ammonia, it can be that too high an ammonia pressure build up occurs inside the system, due to thermal inertia or to a potential failure of the heating power regulation. In order to release the pressure above a given set-point, the excess of gaseous ammonia is preferably released by a security valve and either directly returned to the ammonia precursor tank (preferred embodiment in the case of a solid ammonia precursor), or first dissolved in an adequate amount of water, for instance coming from the evaporation of the precursor solution the case being, and stored on purpose, and at a composition involving an amount of available ammonia identical to the one of the precursor solution (preferred embodiment in the case of urea precursor solutions). In another preferred embodiment, the excess of ammonia released can merely be dissolved in water and the ammonia solution so obtained can be used later on for thermal ammonia generation and storage on the solid storage medium.

The present invention also concerns a system for applying the SCR method described above to the exhaust gases of a combustion engine, said system comprising:
- a storage tank for an ammonia precursor solution
- a solid storage medium which stores ammonia by sorption
- means for directing a stream of ammonia precursor solution to a heater allowing the thermal decomposition of said stream to generate water and ammonia
- means for separating the water from the ammonia
- means for directing the ammonia to the solid storage medium.

As explained above, the invention generally involves 2 separate storage tanks which may however be assembled or be two separate chambers of a same container.

Preferably, the storage tank for the solid storage medium comprises or is connected to a pressure release valve as described above.

The heater generally is chamber containing a heating device like a resistive heating element, and/or being in contact with a heat flux available on the vehicle as set forth above.

The means for directing the stream of ammonia precursor solution to the heater generally comprise a pipe, a valve and eventually a pump, although if the heater is located below the storage tank of the ammonia precursor solution, the stream can merely be generated by gravity.

The means for separating the water from the ammonia may be a condenser and/or a membrane as set forth above.

The means for directing the ammonia to the storage tank of the solid storage medium may be a simple tube (pipe) and said ammonia may be mixed with other gaseous decomposition product(s) like CO₂ for instance.

In one embodiment, the system of the invention also comprises a pressure relief valve enabling to release pressure above a given set point in the storage tank of the solid storage medium. Preferably, it also comprises means for dissolving the gases so released into a given amount of water and means for returning the so obtained solution to the storage tank of an ammonia precursor solution.

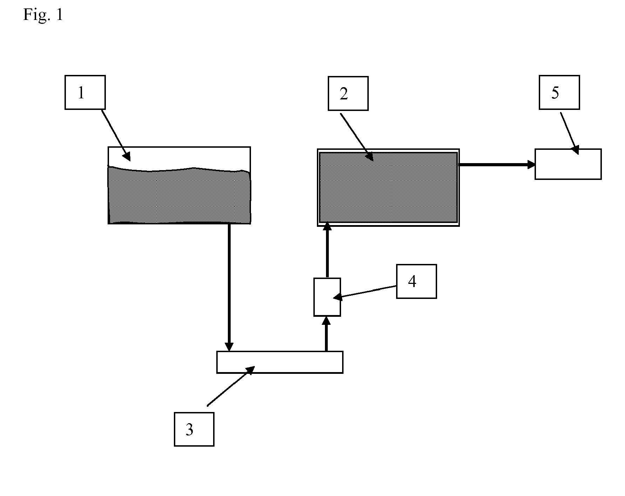

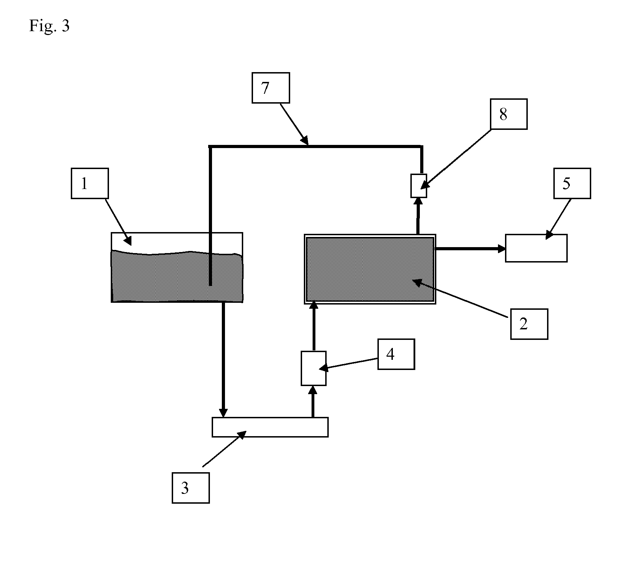

The present invention is illustrated in a non limitative way by the examples below relying on figures 1 to 3 attached. In these figures, identical or similar devices bear identical reference numbers.

### Example 1

In this example, relying on Figure 1 attached, a liquid solution of an ammonia precursor is stored in a tank [1]. The solution is preferably a 32.5% urea solution commercially available under the brand name Adblue^{®}, but other soluble ammonia compounds (like ammonium carbamate) are also suitable. A stream of the solution comes in contact with a heater [3], where water evaporation and urea decomposition occur. The water is further separated in the condenser [4], and the remaining gaseous flow goes through the tank [2] where ammonia is trapped.

The heat source of the heater [3] can be derived from a hot part of the vehicle, and is preferably a section of the exhaust line. Alternatively, the heater can also be electrical. The temperature range is 40°C - 500°C. If necessary, the ammonia precursor solution can be sprayed on the heating device. As regards the content of the tank [2], any material showing ammonia sorption properties is convenient; however, a matrix containing alkaline earth metal chloride is particularly adapted. The excess of carbon dioxide is either trapped in the condensed water or released in the exhaust pipe [5], when the pressure inside the tank [2] reaches a pre-set level. When no urea solution is available (for instance in case of cold start or when tank [1] is empty), ammonia is desorbed from the solid which is stored in the tank [2], and carried to the exhaust line [5], upstream of the SCR catalyst. The condensed water can be further vaporized in the exhaust line of the vehicle.

### Example 2

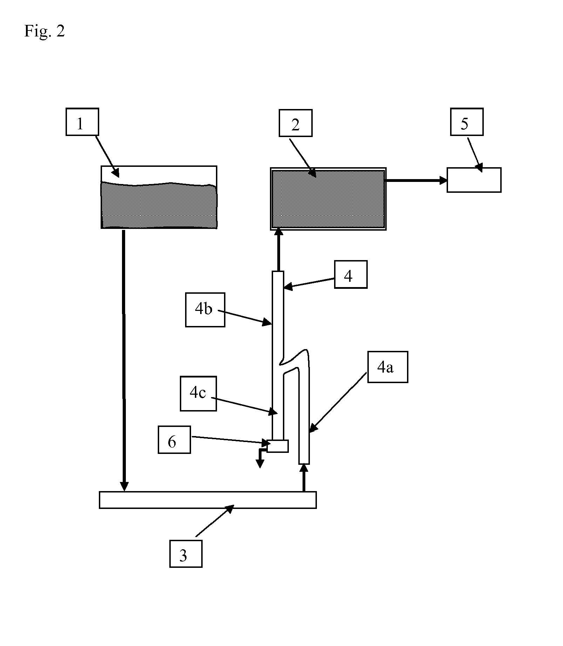

This example, relying on Figure 2 attached, illustrates the case in which the condenser [4] is made of a shaped tube. The tank [1] is filled with a urea solution. The gas flow resulting from the water evaporation and the urea decomposition goes through the inlet part [4a] of the condenser. Water vapors are condensed in part [4b] of the device, having a temperature lower than part [4a]. Liquid water is further collected in part [4c], and is removed by opening the valve [6]. Ammonia vapor goes to tank [2] through the outlet of the part [4b] of the condenser.

### Example 3

In this case, the solution of the ammonia precursor of example 1 is heated in contact with the heating device at a first temperature (for example, in the 40°C - 100°C range), for water to evaporate. The ammonia precursor reaches a solid state. The heating device is then heated at a second temperature (for example in the range 50°C - 500°C) for which the solid ammonia precursor is decomposed with the generation of ammonia gas.

### Example 4

In this example, the condenser of example 1 is removed and the water/gas separation is made effective by using a membrane or a series of membranes at the outlet of the heating device.

### Example 5

In this case, tank [1] is filled with a solid state ammonia precursor, for example: urea or ammonium carbamate, in the form of powder, pellets or flakes. A stream (part) of the solid is drawn to the heater where ammonia is generated, and further trapped in a solid material in the tank [2]. No separator device (water condenser, for example) is needed in this example.

### Example 6

In this example, relying on Figure 6 attached, a pressure safety function of tank [2] is described in this example. When pressure build up inside the tank [2] is higher than a set value, the pressure valve [8] is open, and the ammonia gas flows to the tank [1], through the line [7]. Ammonia is further dissolved in the solution which is stored in the tank [1].

In a preferred embodiment, which is not illustrated in Figure 6, line [7] does not return ammonia directly to tank [1] but instead, it conveys it first to a chamber/tank where it is dissolved in an appropriate amount of water so as to reach the right composition (preferably having the same amount of available ammonia as the solution in tank [1] and the urea solution so obtained is then sent to tank [1].

This can de bone for instance by storing a given amount of water in the chamber, by deducing the amount of ammonia released from the pressure difference since the beginning of the pressure release and by returning the solution to the tank when the right ammonia concentration is reached.

## Claims

1. SCR or Selective Catalytic Reduction method for the exhaust gases of an internal combustion engine, according to which:
- an ammonia precursor is stored in a storage tank
- part of this precursor is thermally decomposed either directly prior to or while being metered into the exhaust gases
- at least intermittently and parallel to or in alternation therewith, ammonia released from a solid storage medium where it is stored by sorption is also metered in the exhaust gases, said ammonia having been generated by thermally decomposing a stream of the stored urea precursor in a heater,
wherein no fluid is returned from the heater to the storage tank and wherein:
- either the thermal decomposition of the ammonia precursor generates no water
- or the thermal decomposition of the ammonia precursor generates water which is separated from the ammonia and collected.

2. SCR method according to the preceding claim, wherein the ammonia precursor is a solid compound releasing ammonia but no water by thermal decomposition

3. SCR method according to the preceding claim, wherein the ammonia precursor is solid urea or ammonium carbamate.

4. SCR method according to the claim 1, wherein the ammonia precursor is an aqueous urea solution.

5. SCR method according to the preceding claim, wherein the ammonia precursor is a eutectic water/urea solution.

6. SCR method according to claim 4 or 5, wherein separation of the water from the ammonia is made using a condenser or a membrane.

7. SCR method according to any of the preceding claims, wherein the metering of ammonia desorbed from the solid storage medium takes place when the engine is running and when there is no ammonia precursor available in the storage tank.

8. SCR method according to any of the preceding claims, wherein the thermal decomposition of the ammonia precursor stream in the heater is performed using the dissipated heat of the engine and/or exhaust gases.

9. SCR method according to any of the preceding claims, wherein the thermal decomposition of ammonia precursor stream in the heater is achieved at the end of engine operation.

10. SCR method according to any of the preceding claims, wherein the solid storage medium is also stored in a container and in order to release the pressure above a given set-point, the excess of gaseous ammonia is released by a security valve.

11. SCR method according to the preceding claim, wherein the ammonia precursor is an aqueous solution of urea and wherein the excess of gaseous ammonia released by the security valve is first dissolved in an adequate amount of water before being returned to the ammonia precursor tank.

12. System for applying an SCR method according to any of the preceding claims, said system comprising:
- a storage tank for an ammonia precursor solution
- a solid storage medium which stores ammonia by sorption
- means for directing a stream of ammonia precursor solution to a heater allowing the thermal decomposition of said stream to generate water and ammonia
- means for separating the water from the ammonia
- means for directing the ammonia to the solid storage medium.

13. System according to the preceding claim, comprising a second storage tank for the solid storage medium.

14. System according to the preceding claim, wherein the storage tank for the solid storage medium comprises or is connected to a pressure release valve.

15. System according to any of claims 12 to 14, wherein the means for separating the water from the ammonia comprise a condenser and/or a membrane.
